## Europäisches Patentamt

## European Patent Office

## Office européen des brevets

(19)

(11) Publication number: **0 341 219**
**A2**

(12) **EUROPEAN PATENT APPLICATION**

(21) Application number: **89830183.3**

(22) Date of filing: **02.05.89**

(51) Int. Cl.⁴: **G 06 F 15/02**

(30) Priority: **03.05.88 IT 6740788**

(43) Date of publication of application:
**08.11.89 Bulletin 89/45**

(84) Designated Contracting States:
**AT BE CH DE ES FR GB GR IT LI LU NL SE**

(71) Applicant: **SEAT - DIVISIONE STET S.P.A.**
**Via Aurelio Saffi, 18**
**I-10138 Torino (IT)**

(72) Inventor: **Manucci, Franco**
**Seat-Divisione Stet S.p.A. Via Aurelio Saffi, 18**
**I-10138 Torino (IT)**

**Carita', Enrico**
**Seat-Divisione Stet S.p.A. Via Aurelio Saffi, 18**
**I-10138 Torino (IT)**

(74) Representative: **Bosotti, Luciano et al**
**c/o Jacobacci-Casetta & Perani S.p.A. Via Alfieri, 17**
**I-10121 Torino (IT)**

(54) An integrated automatic information and telephone point.

(57) The possible functions of an information point (POI) or automatic information stand (3) are integrated with the functions normally performed by a conventional telephone box (2), particularly as regards the possibility of the automatic information services requested being charged according to the criteria (7) used for the charging of calls from telephone boxes.

FIG. 1

**Description**

## An integrated automatic information and telephone point

The present invention relates in general to the integration of so-called automatic information stand or information point (POI = Point Of Information) devices with those for telecommunications (voice and data).

Information points of known type consist of equipment based on processors, usually a personal computer (P.C.), provided with peripherals (for example magnetic disk-drives) and with at least one user-friendly equipment-user interface.

Since they are situated in particularly crowded places (for example at shows and events) or in transit areas (airports, railway stations, motorway service areas, etc.), they are freely accessible to the public and are normally used to provide information of various types and advertising messages. The information may be provided locally, that is, it may be resident in the local memory of the processor in the stand or by the remote accessing of data banks and/or services. For the latter aspect, the stand which is provided with the necessary software, can operate in principle like an intelligent terminal for any automatic information service and also for services such as facsimile and telex. Moreover, it is also possible, at least at an elementary level, to transfer documents electronically (EDI = Electronic Data Interchange). For all these "remote" operations, the stand uses the telephone network or a data network (for example, a packet switched system) which is connected by means of dedicated or switched telephone lines. The widening of the operations of the automatic information stand to operations such as telex, facsimile, electronic mail, EDI, etc. extends the concept of the public call box to this type of service for the use of commercial operators who are, by definition, itinerant (for example, hauliers, representatives, etc.), travelling businessmen, users with a limited volume of business, etc...

The prospective development of the automatic information stand from a simple vehicle for information and advertising to the concept of a "public automatic information booth" also requires the user to be provided with normal telephone services, with one or more public telephones being incorporated in the automatic information stand.

The combination of an automatic information point-telephone (public and/or private) actually enables the user to be provided with all the telephonic services as well as all the services imaginable at an automatic information point. From the point of view of the user, the combination of the devices also results in the possibility of the information point automatically providing the information necessary for access to telephonic services, for example multilingual assistance for international calls, or for access to special services. In this case, the most elementary operation of the information point is the "handling" of the information present in the front of the telephone directory. Moreover, by interacting with the information point, the user may, for example, request the automatic dialling of the nearest taxi service identified by the information point, for example, within the scope of a service based on electronic maps, or the automatic sending of a message such as a facsimile. In short, the equipment enables automatic switching between telephonic services and POI services with an obvious synergic effect.

Equipment of this type could potentially be produced by the development of the telephone towards a form of "intelligent telephone" by the introduction of a processing capacity into the telephone.

In this case, it would be possible to have a set of solutions which ranging from a CPU-ROM board inserted in the telephone, at the lower extremene, to terminals for digital networks (ISDN) integrated in the services, at the upper extreme.

However, a solution of this type would encounter considerable practical obstacles in the development of the part of the service normally allocated to the information point, because it would be linked to the information part of the telephone. It would be difficult to develop the hardware for the "intelligent telephone" with the speed typically required by the information technology market, particularly as regards peripheral units such as compact disc players, printers, etc... This aspect is definitely critical, since automatic information and, to an even greater extent, the services of an information point, are still quite far from being sufficiently well-established to enable specific requirements to be defined with some guarantee of stability.

The object of the present invention is therefore to make the development of the telephone (and the telephonic services) as independent as possible of that of automatic information points (POI) and of the services contained therein, whilst achieving the maximum functional integration for the user.

According to the present invention, this object is achieved by means of an integrated automatic information and telephone point, characterised in that it includes, in combination:

- telephone apparatus which can be connected to a network by means of a physical telephone channel and has an associated subsystem for collecting the charges for the telephone calls made with the apparatus, and

- a terminal for the supply of automatic information services, provided with means for connection to the physical telephone channel and with a service-charging function which operates on the collecting subsystem.

The invention will now be described, purely by way of non-limiting example, with reference to the appended drawings, in which:

Figure 1 shows, in the form of a block diagram, the structure of the integrated information point according to the invention,

Figure 2 shows schematically a physical embodiment of the point of Figure 1 in the form of a stand or booth accessible to the public, and

Figure 3 shows the circuit layout of the structure of Figure 1, in greater detail.

In the drawings, an information point or user point is generally indicated 1, there being synergically integrated therein:

- a telephone user point 2, illustrated here in the form of a public telephone point, and

- an automatic information point (POI) 3.

According to a wholly conventional solution, the telephone point 2 is composed essentially of telephonic transmitter-receiver apparatus 4 connected to the telephone network by means of a loop 5 (which, as will be seen, constitutes the only physical support for the communication of the whole point 1 with the network) and provided with the normal dialling or selector keypad 6 (or possibly even a dial, although the latter solution is more restrictive in terms of ease of use).

The charge-collecting subsystem of the telephone box is indicated 7 and is constituted by a so-called coin box, preferably a version which reads and erases magnetic cards, and by the calculating components associated therewith.

As regards the automatic information point 3, reference is made, purely by way of non-limiting example, to a configuration comprising an advanced processing module, such as a personal computer 8, provided with a display screen 9 and having a printer 10 (also for facsimile functions) and an optical-disc reader (CD) 11 associated therewith as peripheral units.

Finally, a modem, indicated 12 can enable the communication of data to and from the personal computer 8.

It should be stated that all the components 8 to 12 of the information point 3, like all the parts constituting the telephone unit 2, are widely known and available commercially, and are therefore such as not to require a detailed specific description.

The telephone unit 2 and the information point 3 are connected by three connecting lines, indicated 13, 14 and 15.

The line 13 connects the modem 12 to the telephone apparatus 4, and therefore to the loop 5, and represents the capacity for the automatic dialling and answering of calls, the coding and decoding of multi-frequency signals, the monitoring of connections being made, and the detection of an engaged line, a call current and a vocal response. It should be stated that all this requires no previous approval by the competent regulating authorities (P.P.T.T.) or the management of the telecommunications network. The only restriction is that these functions are achieved with galvanic insulation (connections without metallic continuity) between the telephone and PC with the use, for example, of optical couplers. The functions represented by the line 13 can be achieved equally well for public and private telephones.

The line 14 (whose presence, however, is optional) enables the keypad of the telephone also to be used as a keyboard for the PC.

The line 15 represents the most innovative aspect of the combination which is the subject of the present invention, since it enables the collecting system 7 of the public telephone 2 also to be used for services typical of the information point 3, particularly for automatic information services. In other words, in the solution according to the invention, the charges relating to automatic information services requested and supplied by the point 3, as calculated by the processor 8, are transferred by means of the line 15 to the collection subsystem 7 which accepts the user's payment therefor by following the same criteria as for payment for telephone calls made by the telephone apparatus 4, that is, in the form of "units" to be charged on bills (in the case of a private telephone user) or of tokens, coins or the erasure of magnetic cards (in the case of public telephones). This solution enables the elimination of a specific weakness from the point of view of the entry of information points into the market, that is, the difficulty of providing services (or even entertainment functions) with direct payment by the user. Currently, the few existing installations are almost always justified by the bodies covering their expenses basically as instruments for promoting their own image as innovative.

The solution according to the invention therefore provides an excellent solution to the problem of payment for automatic information services requested at the point 1 according to the same methods as conventionally used for payment for telephone calls and therefore without the need for the use of specific solutions.

In fact, it is improbable that credit cards could constitute suitable instruments of payment. Credit cards require validation by the recognition of the signature (or, in the future, of fingerprints): clearly, a practical solution could be that of the abandonment of validation, if the manager of the service could accept the abandonment of any payment, subject to dispute by the user, or if the issuer of the credit card would take responsibility for it. Other payment cards, such as bank cards, are validated by means of the checking of a "secret code" which requires access to a non-local data bank. Again, validation may present important problems if the service required does not envisage subscription by the user beforehand and does not therefore provide for deferred payment. In this case, the validation of a card would require the connection of heterogenous networks with costs which may be comparable to those of the transaction by the user.

If it is taken into account that each individual transaction usually requested at the automatic information point 3 probably costs a modest sum, comparable to the cost of an international trunk-dialled call, it is more practical to use magnetic cards of the type already in use for public telephones. Credit cards could be used more usefully for the purchase of a certain number of such magnetic cards whose widespread distribution must be provided for.

In the solution according to the invention, the result described above is achieved by the line 15 which connects the personal computer 8 to the collecting subsystem 7, without the need for substantial modification of the part of the telephone 2 for the electronic control of the reading-erasure of the magnetic card. The point 3 organises locally the calculators for charging the various services and automatically transmits their contents, at the frequency agreed with the management, to the relevant central processing system or to the remote management and supervision processing system of the group of integrated information points.

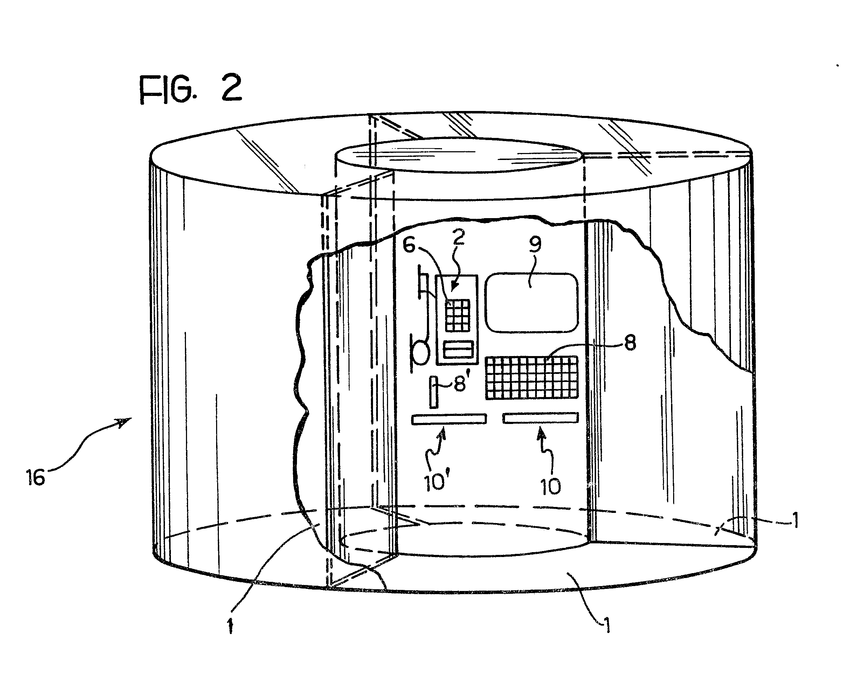

The availability of multitasking personal computers (PCs) enables the provision of multi-user stations or booths 16 of the type illustrated in Figure 2, three points 1 being grouped in a single station or booth. Each point 1 of the booth 16 may be formed differently, for example, with only the screen 9 and the keyboard of the personal computer 8, since it may be sufficient to provide a single position with all the peripherals. Similarly, the booth 16 may also be equipped with a number of telephone lines which is less than the number of points 1. In these cases, the PC directs the codes to the peripherals and to the telephone lines by means of software.

The embodiment shown in Figure 2 enables a connector 8' to be provided in the point 1 for the connection of a personal computer belonging to the user, for cooperation with the personal computer 8 of the point 1. A reader 10' associated with the printer 10 has also been provided, for example, for reading messages intended for facsimile transmission.

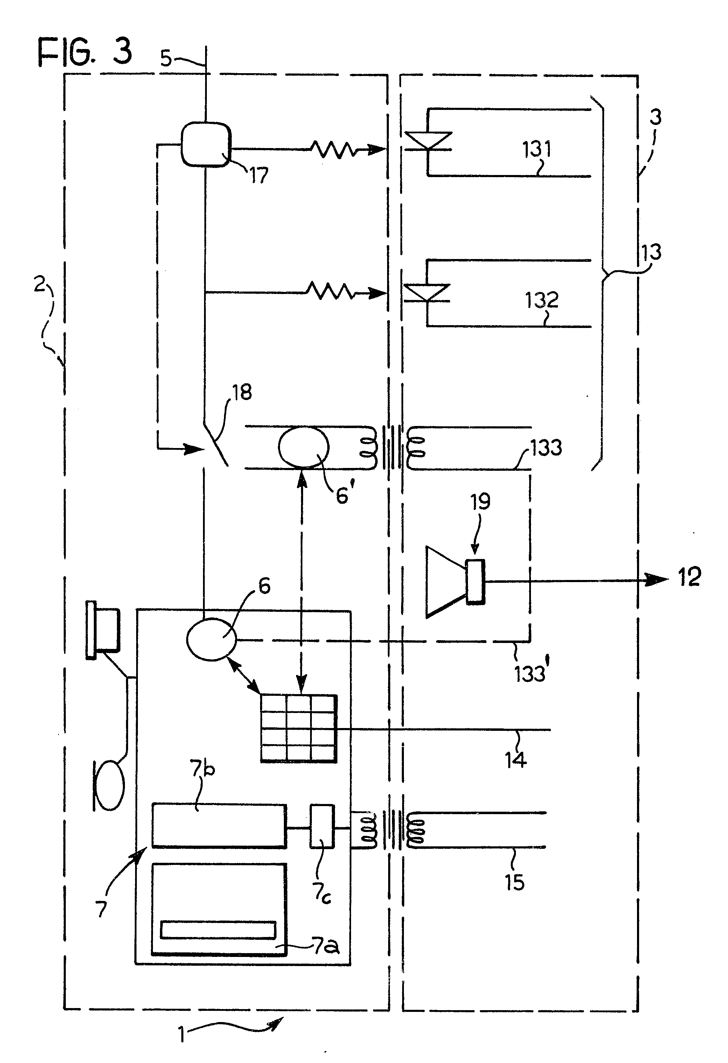

Figure 3, which illustrates schematically the interconnections between the telephone part 2 and the personal computer 8, shows that the structure of the point 1 may be defined so as to enable the combination, although only partial, of the POI and the telephone.

In particular, it can be seen that the line 13 may be constituted by the three connections 131, 132, 133 of Figure 3 which enable the modem 12 to be connected to the loop 5 so as to perform the three functions of i) detecting incoming calls (by means of a detector 17), ii) detecting the state of the line, and iii) dialling (by means of a selector 6' which may in fact coincide with the selector 6 of the telephone apparatus 5), all by means of a switch 18 associated with the relay 17 according to known criteria. Since the management of the line through the connection 133 takes place with the line disconnected from the telephone, the point 3 sends reassuring messages, when necessary, by means of a loudspeaker 19 of the personal computer, to the telephone user, whose line would be completely dead. For incoming calls, the personal computer is programmed to reply after a certain number of rings, giving the local telephone user the opportunity to pre-empt it.

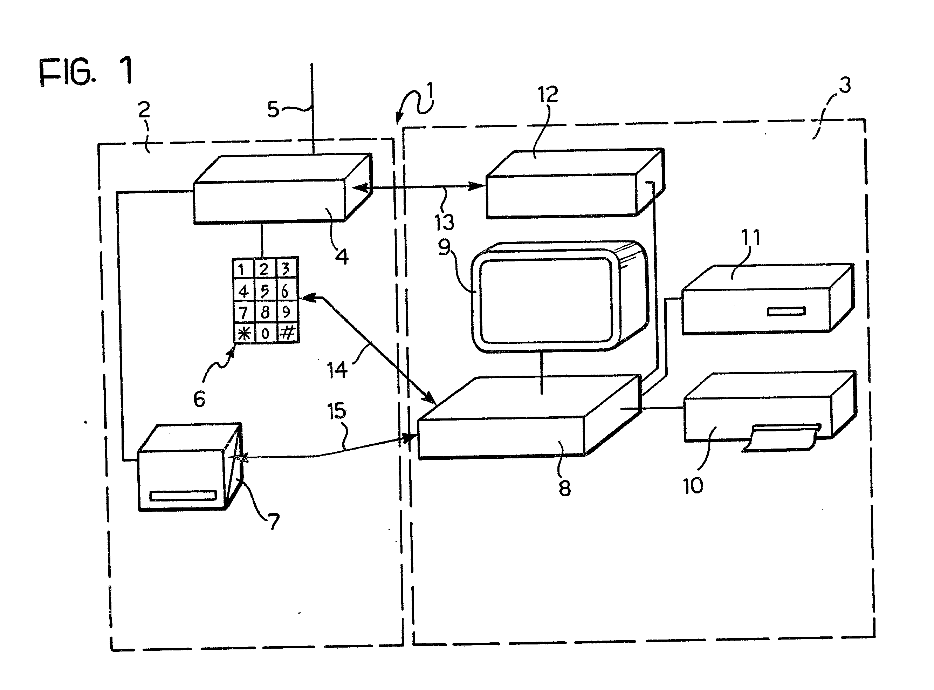

Figure 1 also shows the arrangement of the management line from the point 1 with the interconnections which, unlike the connection 133, are connected to the telephone, thus providing greater physical integration between the telephone point 2 and the information point 3. For example, this enables the selector 6 of the telephone 2 also to be used physically as a selector for the modem 12 (line 133') or even the connection of the selector keypad to the personal computer 8 (line 14 of Figure 1) as the keyboard for the operation of the latter.

The most important element is constituted by the operation of the function represented by the line 15 of Figure 1 (the connection of the personal computer 8 to the collection subsystem 7).

The collection system 7 is composed substantially of a megnetic card reader/eraser 7a directed (in known manner) by a CPU 7b which is controlled by a microprogram and, by means of an interface 7c, can be connected to the line 15 for charging the services requested at the automatic information point 3, in addition to its normal connection to the telephone apparatus 4 for charging telephone calls.

It should be also be remembered that the requirement not to change the aspects of the network prescribed by the regulations currently in force means that the lines 13, 14 and 15 must have galvanic insulation. This can easily be achieved, for example, by the interposition of optical couplers in these lines.

## Claims

1. An integrated automatic information and telephone point, characterised in that it comprises, in combination:
- telephone apparatus (4) which can be connected to a network by means of a physical telephone channel (5) and has an associated subsystem (7) for collecting the charges for the telephone calls made with the apparatus (4), and
- a terminal (3) for the supply of automatic information services, provided with means (12) for connection to the physical telephone channel (5) and with a service-charging function (8) which operates (15) on the collecting subsystem (7).

2. An information point according to Claim 1, characterised in that the collecting subsystem (7) includes a magnetic card reader/eraser unit (7a).

3. An information point according to Claim 1 or Claim 2, characterised in that the telephone apparatus (4) includes a selector unit (6), and in that the connection means (12) of the terminal (3) for the supply of automatic information services interact with the physical channel (5) through (133') said selector unit (6).

4. An information point according to any one of Claims 1 to 3, characterised in that the telephone apparatus (4) includes a keypad selector unit and in that the terminal (3) for the supply of automatic information services includes a processing unit (8) connected to the keypad and arranged (14) so as to use the keypad as a control keyboard and/or for the introduction of data.

5. An information point according to any one of Claims 1 to 4, characterised in that a warning device (19) is associated with the connection means (12) and can emit a signal indicative of the fact that the physical telephone channel (5) is currently in use for the communication of the terminal (3) for the supply of automatic information services.

6. An information point according to any one of the preceding claims, characterised in that the telephone apparatus (2) and the terminal (3) for the supply of automatic information services are interconnected by means of lines (13, 14, 15) with galvanic insulation.

7. An information point according to Claim 1, characterised in that the terminal (3) for the supply of automatic information services includes its own processing unit (8) and is provided with connections (8′) for the connection of an auxiliary processing unit carried by the user.

8. An information point according to Claim 1, characterised in that the terminal (3) for the supply of automatic information services includes at least one peripheral unit selected from the group constituted by:
- a display screen (9),
- an optical disc reader (11),
- a printer unit (10),
- an optical document reader (10′).

9. An information point according to any one of the preceding claims, characterised in that the terminal for the supply of automatic information services includes a processing unit (8) which is used jointly by at least one other structurally similar information point (1).

FIG. 1

EP 0 341 219 A2

FIG. 2

EP 0 341 219 A2

# FIG. 3